# EUROPÄISCHE PATENTSCHRIFT

(11) **EP 4 140 672 B1**
(45) Veröffentlichungstag und Bekanntmachung des Hinweises auf die Patenterteilung: **19.06.2024**
(21) Anmeldenummer: 21193482.3
(22) Anmeldetag: 27.08.2021
(51) Int. Cl.: B27B 33/14, B23D 65/00

(54) **TREIBGLIED FÜR EINE SÄGEKETTE UND EINE ANORDNUNG MEHRERER TREIBGLIEDER FÜR EINE SÄGEKETTE**
DRIVING MEMBER FOR A SAW CHAIN AND ARRANGEMENT OF SEVERAL DRIVING MEMBERS FOR A SAW CHAIN
MAILLON D'ENTRAÎNEMENT POUR UNE LAME DE COUPE ET AGENCEMENT DE PLUSIEURS MAILLONS D'ENTRAÎNEMENT POUR UNE LAME DE COUPE

(43) Veröffentlichungstag der Anmeldung: 01.03.2023
(73) Patentinhaber: Andreas Stihl AG & Co. KG, 71336 Waiblingen (DE)
(72) Erfinder: GRAMS, Tobias, 71332 Waiblingen (DE); MÄRZ, Jürgen, 73540 Heubach-Lautern (DE); KIENZLE, Wolfgang, 71686 Remseck (DE); WITTIG, Maureen, 70376 Stuttgart (DE); FREITAG, Marius, 9500 Will (CH); KEWES, Marco, 9243 Jonschwil (CH)
(74) Vertreter: Karzel, Philipp

(56) Entgegenhaltungen:
- EP-A1- 0 304 256
- SU-A1- 90 819
- US-A- 2 589 015
- US-A1- 2008 072 733

## Beschreibung

Die Erfindung betrifft ein Treibglied für eine Sägekette mit den Merkmalen des Oberbegriffs des Anspruchs 1 und eine Anordnung mehrerer Treibglieder für eine Sägekette.

Eine Sägekette montiert auf einem Arbeitsgerät, beispielsweise auf einer Motorsäge dient zum Abtragen oder Zerspannen eines Werkstückes. Eine Sägekette kann aus einer Vielzahl von Gliedern, wie den Treibgliedern, den Schneidgliedern und den Verbindungsgliedern zusammengesetzt sein.

Ein Treibglied weist an seiner Unterseite einen Treibansatz auf, der in montiertem Zustand der Sägekette in die Nut der Führungsschiene greift. An der Oberseite eines Treibgliedes kann ein Treibgliedhöcker vorgesehen sein. Derartige Treibglieder werden auch als Höcker-Treibglieder bezeichnet. Ein Treibglied mit Höcker ist in Laufrichtung der Sägekette vor dem Schneidglied angeordnet und dient zu Verstärkung des Tiefenbegrenzers des Schneidglieds. Dadurch ist die Sägekette besonders rückschlagarm.

Derartige Treibglieder werden im Stanzverfahren hergestellt. Blechstreifen werden durch das Stanzwerkzeug geführt, wobei sich Oberteil und Unterteil fortwährend schließen und öffnen, und dabei die Treibglieder aus den Blechstreifen ausgestanzt werden.

Aus der US 2008/0072733 A1 ist eine Sägekette mit einem Treibglied bekannt, wobei das Treibglied einen Höcker mit einem Tiefenbegrenzer aufweist. Die Oberseite des Treibgliedes ist wellenförmig ausgebildet.

Aus der US 2,589,015 A ist ein Treibglied einer Sägekette mit einem Höcker bekannt.

Aus der SU 90 819 A1 ist eine Treibgliedanordnung aus einem Doppelschneidglied und einem Treibglied bekannt. Das Doppelschneidglied ist mit dem Treibglied nietverbunden.

Aus der EP 0 304 256 A1 ist eine Sägekette mit mehreren Treibgliedern bekannt.

Nachteilig an bekannten Treibgliedern ist, dass aufgrund deren vergleichsweise großen Flächenmaße im Herstellungsprozess ein nur geringer Ausstoß pro Blechstreifen erzielt werden kann.

Der Erfindung liegt die Aufgabe zugrunde, ein Treibglied der gattungsgemäßen Art zu schaffen, das eine kostengünstige Herstellung des Treibgliedes und der Sägekette ermöglicht.

Diese Aufgabe wird durch ein Treibglied für eine Sägekette mit den Merkmalen des Anspruchs 1 gelöst.

Bei Stanzverfahren ist es wie auch in anderen Fertigungsverfahren grundsätzlich immer Ziel eine Werkstückkontur zu erzielen, die der herzustellenden Soll-Kontur entspricht. Um dies zu erreichen, muss ein exakter Schnitt beim Stanzen erfolgen. Dem Erfindungsgedanken liegt die Erkenntnis zugrunde, dass ein solch exakter Schnitt dann erzielt werden kann, wenn die auszustanzenden Konturen ausreichend zueinander beabstandet sind, so dass der zwischen den beiden Konturen verbleibende Materialsteg eine ausreichende Widerstandkraft beim Schneiden gewährleistet. Alternativ kann eine exakte Schnittkontur dann erzeugt werden, wenn mit einem Schnitt die Konturen beider Werkstücke erzeugt werden. Das nachfolgende Treibglied lässt eine entsprechende Anordnung der Treibglieder zu, bei der mit einem Schnitt die Konturen beider Werkstücke erzeugt werden können.

Das Treibglied für eine Sägekette weist zwei Öffnungen für Gelenkelemente, einen Treibansatz und einen Treibgliedhöcker auf. Das Treibglied ist flächig ausgebildet und erstreckt sich in einer Treibgliedebene. Das Treibglied weist eine Öffnungsebene auf, die die Mittelachsen der Öffnungen enthält und senkrecht zur Treibgliedebene verläuft. Das Treibglied weist eine Querebene auf, die senkrecht zur Öffnungsebene und mittig zwischen den Mittelachsen der beiden Öffnungen verläuft. Das Treibglied weist eine Längsachse auf, die in der Treibgliedebene verläuft und die Mittelachsen der Öffnungen schneidet. Der Treibgliedhöcker ist unsymmetrisch zur Querebene ausgebildet. Das Treibglied weist eine der Öffnungsebene abgewandt liegende Oberseite auf, die mindestens teilweise am Treibgliedhöcker verläuft. An der Oberseite des Treibglieds sind eine funktionale Fläche und eine von der funktionalen Fläche beabstandete Anlagefläche vorgesehen. Die funktionale Fläche ist auf dem Treibgliedhöcker ausgebildet und umfasst einen Abschnitt der Oberseite, in welchem die Oberseite einen maximalen Abstand zur Öffnungsebene aufweist. Die funktionale Fläche der Oberseite des Treibglieds ist gegenüber der Anlagefläche in Blickrichtung auf die Treibgliedebene punktsymmetrisch zu einem Symmetriepunkt ausgebildet.

Die Erfindung sieht vor, die Geometrie der Treibglieder derart auszulegen, dass sich die Stanzkonturen der Treibglieder kontaktieren können. Durch die punktsymmetrische Ausgestaltung der funktionalen Fläche und der Anlagefläche eines Treibgliedes können zwei Treibglieder derart zueinander angeordnet werden, dass sich die Treibglieder an ihren Oberseiten kontaktieren. Dabei kontaktiert die funktionale Fläche des einen Treibgliedes die Anlagefläche des anderen Treibgliedes. Zudem kontaktiert die Anlagefläche des einen Treibgliedes die funktionale Fläche des anderen Treibgliedes. Dadurch sind die Stanzkonturen der Treibglieder über die Breite des Blechstreifens kompakt angeordnet, wodurch der Ausstoß an gefertigten Treibgliedern pro Blechstreifen erhöht ist und die Produktionskosten für das Treibglied gesenkt werden können. Durch die unmittelbare Anordnung der Treibglieder zueinander, können mit einem Schnitt Konturen beider Treibglieder erzeugt werden. Somit können beim Herstellungsprozess der Treibglieder geringe Fertigungstoleranzen trotz hoher Stückzahlen eingehalten werden.

Es ist vorteilhaft vorgesehen, dass sich die funktionale Fläche der Oberseite über eine in Richtung senkrecht zur Öffnungsebene gemessene Tiefe erstreckt, wobei die Tiefe höchstens 20%, insbesondere höchstens 10% des maximalen Abstands zwischen der funktionalen Fläche und der Öffnungsebene entspricht. Demnach ist die funktionale Fläche der Abschnitt der Oberseite des Treibgliedes, der beim Schneiden eines Werkstoffes den Schnittgrund kontaktiert und als Tiefenbegrenzer des Schnittes dient. Vorzugsweise beträgt eine in Richtung der Längsachse gemessene Länge der funktionalen Fläche mindestens 15%, insbesondere mindestens 25% einer in Richtung der Längsachse gemessenen Länge des Treibglieds.

Es ist vorzugsweise vorgesehen, dass die Oberseite des Treibgliedes einen ersten Mittelabschnitt und einen zweiten Mittelabschnitt aufweist, wobei sich der erste Mittelabschnitt von der funktionalen Fläche bis zum Symmetriepunkt und der zweite Mittelabschnitt von dem Symmetriepunkt bis zur Anlagefläche erstrecken.

Der erste Mittelabschnitt und der zweite Mittelabschnitt sind vorteilhaft derart ausgebildet, dass bei einer Anordnung zweier Treibglieder zueinander, in der sich die Oberseiten der Treibglieder kontaktieren und deren Symmetriepunkte aufeinander liegen, kein Zwickel zwischen den Mittelabschnitten der Oberseiten gebildet ist. In einer alternativen Ausbildung des Treibgliedes sind der erste Mittelabschnitt und der zweite Mittelabschnitt insbesondere derart ausgebildet, dass bei einer Anordnung zweier Treibglieder zueinander, in der sich die Oberseiten der Treibglieder kontaktieren und deren Symmetriepunkte aufeinander liegen, ein Zwickel zwischen den Mittelabschnitten der Oberseiten mit einem kleinsten Radius von mindestens 1,5 mm, vorzugsweise mindestens 1,65 mm vorgesehen ist. Vorzugsweise ist der Radius des Zwickels mindestens 1,5-mal so groß wie die Blechstärke bzw. die Breite des Treibgliedes. Sollte also die Oberseite einen nicht symmetrischen Abschnitt aufweisen, so ist der daraus resultierende Zwickel mit einem entsprechenden Mindestradius zu versehen. In anderen Worten beträgt der Durchmesser des Zwickels mindestens 3 mm. Aufgrund der vorgegebenen Mindestgröße des Zwickels kann ein exakter Ausschnitt des Zwickels erfolgen.

Es ist vorteilhaft vorgesehen, dass der erste Mittelabschnitt gegenüber dem zweiten Mittelabschnitt in Blickrichtung auf die Treibgliedebene zumindest teilweise punktsymmetrisch bezüglich des Symmetriepunktes ausgebildet ist. Vorzugsweise ist der erste Mittelabschnitt gegenüber dem zweiten Mittelabschnitt in Blickrichtung auf die Treibgliedebene vollständig punktsymmetrisch bezüglich des Symmetriepunktes ausgebildet. Liegt eine vollständige Symmetrie der Oberseite vor, entsteht bei einer Anordnung zweier Treibglieder an ihren Oberseiten kein Zwickel. Dieser Umstand vereinfacht den Herstellungsprozess erheblich, da der Zwickel nicht in einem vorgelagerten Stanzprozess ausgestanzt werden muss. Vorzugsweise bilden die funktionale Fläche, der erste Mittelabschnitt, der zweite Mittelabschnitt und die Anlagefläche die Oberseite des Treibgliedes.

Vorzugsweise weist die Oberseite eine in Richtung der Längsachse gemessene Länge auf, wobei die Länge der Oberseite mindestens 65%, insbesondere mindestens 75%, vorzugsweise in etwa 85% der Länge des Treibgliedes entspricht. Mit zunehmender Länge der Oberseite reduziert sich der Verschnitt zwischen mehreren zueinander angeordneten Treibgliedern bzw. zwischen deren Stanzkonturen.

Der Symmetriepunkt liegt in Richtung der Längsachse bevorzugt zwischen den Mittelachsen der Öffnungen, insbesondere zwischen den Öffnungen, besonders vorteilhaft mittig zwischen den Öffnungen. Der Symmetriepunkt weist zur Querebene einen Abstand vorteilhaft von weniger als 10%, insbesondere von weniger als 5% der Länge des Treibgliedes auf. Je mittiger der Symmetriepunkt bezüglich der Richtung der Längsachse angeordnet ist, desto kompakter lassen sich die Treibglieder zueinander anordnen.

Es ist vorteilhaft vorgesehen, dass das Treibglied an seinem einen Längsende eine erste Stirnseite und an seinem anderen Längsende eine zweite Stirnseite aufweist, wobei die Konturen der beiden Stirnseiten in Blickrichtung senkrecht auf die Treibgliedebene gleichförmig ausgebildet sind. Es kann auch vorgesehen sein, dass die Konturen der beiden Stirnseiten in Blickrichtung senkrecht auf die Treibgliedebene parallel zueinander ausgerichtet sind. Ferner kann es zweckmäßig sein, dass die Konturen der beiden Stirnseiten in Blickrichtung senkrecht auf die Treibgliedebene gleichförmig ausgebildet und parallel zueinander ausgerichtet sind. In einer besonders bevorzugten Ausführung sind die Stirnseiten eines Treibgliedes parallel zur Querebene ausgerichtet. Durch die Ausbildung der vorher genannten Merkmale ist eine Anordnung zweier Treibglieder bzw. deren Stanzkonturen derart möglich, dass sich deren Stirnseiten zumindest teilweise, vorzugsweise vollständig kontaktieren. Somit ist es möglich, zwei Treibglieder so zueinander anzuordnen, dass sich die erste Stirnseite des einen Treibgliedes und die zweite Stirnseite des anderen Treibgliedes kontaktieren und dabei eine einzige Schnittkontur bilden. Dadurch kann auch in Richtung der Längsachse der Treibglieder eine kompakte Anordnung der Stanzkonturen erzielt werden.

Der Erfindung liegt die weitere Aufgabe zugrunde, eine Anordnung mehrerer Treibglieder anzugeben, welche eine kostengünstige Herstellung einer Sägekette ermöglichen.

Diese Aufgabe wird durch eine Anordnung mehrerer Treibglieder für eine Sägekette mit den Merkmalen des Anspruchs 14 gelöst.

Auf diese Anordnung treffen selbstverständlich auch die Vorteile zu, die bereits oben zu dem erfindungsgemäßen Treibglied genannt sind. Ferner ist vorteilhaft vorgesehen, dass der kleinste Radius des mittigen Zwickels mindestens 1,5 mm beträgt. Somit ist eine toleranzarme Herstellung der Treibglieder möglich.

Ausführungsbeispiele der Erfindung werden im Folgenden anhand der Zeichnung erläutert. Es zeigen:
- Fig. 1: eine perspektivische Darstellung eines Ausschnitts einer Sägekette für eine Motorsäge mit einem erfindungsgemäßen Treibglied,
- Fig. 2: eine Seitendarstellung des erfindungsgemäßen Treibgliedes,
- Fig. 3: eine Rückseitendarstellung des Treibgliedes nach Fig. 2,
- Fig. 4: eine Schnittdarstellung des Treibgliedes entlang der Linie IV in Fig. 2 und
- Fig. 5: eine Seitendarstellung einer Anordnung mehrerer Treibglieder.

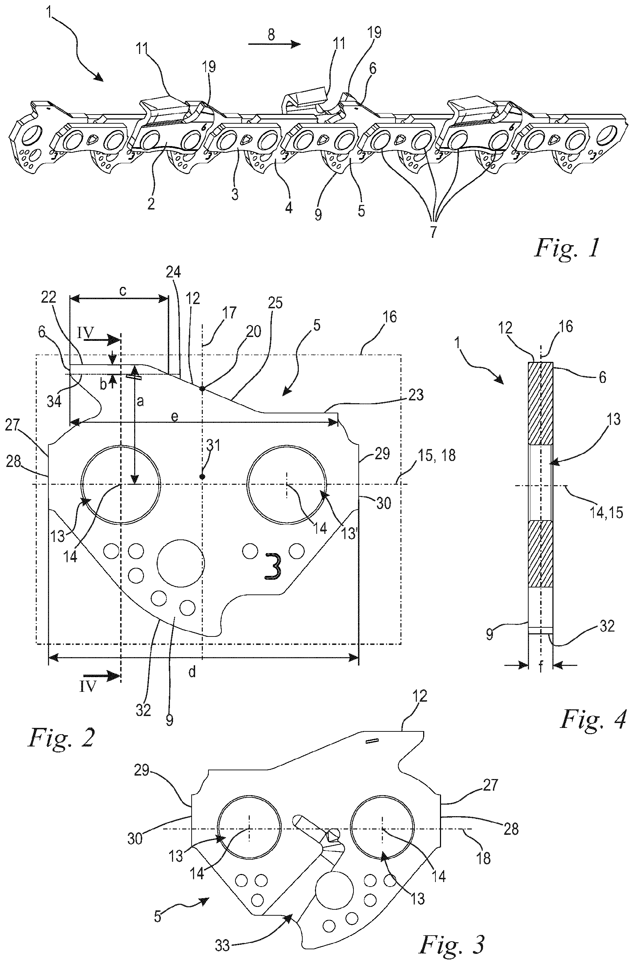

In Fig. 1 ist ein Ausschnitt einer Sägekette 1 für ein Arbeitsgerät, insbesondere für eine Motorsäge gezeigt. Die Sägekette 1 ist aus Schneidgliedern 2, Verbindunggliedern 3 und Treibgliedern 4, 5, aufgebaut. Die Treiblieder 4, 5, Schneidglieder 2 und Verbindungsglieder 3 sind über Gelenkelemente 7, insbesondere Nietbolzen gelenkig miteinander verbunden. Die Sägekette 1 weist eine Laufrichtung 8 auf, in die die Sägekette 1 montiert auf der Motorsäge bewegt werden muss, um Schnittgut, beispielsweise Holz etc. zu schneiden. Mittig der Sägekette 1 sind die Treibglieder 4, 5 angeordnet, an deren Außenseiten die Verbindungsglieder 3 vorgesehen sind. Im Ausführungsbeispiel besitzt jedes Treibglied 4, 5 einen Treibansatz 9 zum Eingriff in ein Antriebsglied einer Motorsäge. Die Treibglieder 4, 5 weisen eine bezüglich der Laufrichtung 8 hintere Öffnung 13 und eine vordere Öffnung 13' auf (Fig. 2). Die hintere Öffnung 13 eines Treibgliedes 4, 5 ist jeweils mit einer vorderen Nietöffnung eines Verbindungsgliedes 3 verbunden, und die vordere Öffnung 13' eines Treibgliedes 4, 5 ist jeweils mit einer hinteren Nietöffnung eines Verbindungsgliedes 3 verbunden. In Laufrichtung 8 gesehen, ist aller zwei Verbindungsglieder 3 ein Schneidglied 2 anstatt eines Verbindungsgliedes 3 angeordnet. Die Schneidglieder 2 sind dabei abwechselnd auf jeweils einer Längsseite der Sägekette 1 vorgesehen. Die Schneidglieder 2 weisen einen Schneidzahn 11 auf, dem ein Tiefenbegrenzer 19 bezüglich der Laufrichtung 8 vorgelagert ist. Der Schneidzahn 11 dient zum spanenden Abtrag des Schnittgutes. Benachbart zum Tiefenbegrenzer 19 ist an einem benachbarten Treibglied 5 ein Treibgliedhöcker 6 zur Verstärkung des Tiefenbegrenzers 8 vorgesehen. Es kann auch ein alternativer Aufbau einer Sägekette 1 vorgesehen sein.

In Fig. 2 ist das Treibglied 5 mit dem Treibgliedhöcker 6 gezeigt. Das Treibglied 5 weist zwei Öffnungen 13, 13', nämlich eine hintere Öffnung 13 und eine vordere Öffnung 13' auf. Ferner umfasst das Treibglied 5 den Treibansatz 9, an dem zumindest teilweise die Unterseite 32 des Treibgliedes 5 verläuft. Wie in Fig. 3 gezeigt, ist an dem Treibglied 4 ein Schmiermittelkanal 33 ausgebildet, der mit den Öffnungen 13, 13' verbunden ist. In Betrieb der Sägekette 1 gelangt Schmiermittel über den Schmiermittelkanal 33 zu den Nietbolzen 7.

In Fig. 4 ist eine Schnittdarstellung des Treibgliedes 5 entlang der Linie IV in Laufrichtung 8 gezeigt. In der Schnittdarstellung ist deutlich zu erkennen, dass das Treibglied 5 flächig ausgebildet ist. Das Treibglied 5 erstreckt sich in einer Treibgliedebene 16. Wie in den Figuren 2 und 4 zu erkennen, weist das Treibglied 5 eine Öffnungsebene 15 auf. Die Öffnungsebene 15 enthält die Mittelachsen 14 der Öffnungen 13. Die Öffnungsebene 15 ist senkrecht zur Treibgliedebene 16 ausgerichtet.

Wie in Fig. 2 gezeigt, weist das Treibglied 5 eine Querebene 17 auf. Die Querebene 17 ist senkrecht zur Öffnungsebene 15 ausgerichtet. Die Querebene 17 verläuft mittig zwischen den Mittelachsen 14 der beiden Öffnungen 13. Ferner weist das Treibglied 5 eine Längsachse 18 auf, wobei die Längsachse 18 in der Treibgliedebene 16 verläuft und die Mittelachsen 14 der Öffnungen 13 schneidet. Der Treibgliedhöcker 6 ist unsymmetrisch zur Querebene 17 ausgebildet.

Wie in Fig. 2 gezeigt, weist das Treibglied 5 eine der Öffnungsebene 15 abgewandt liegende Oberseite 12 auf. Die Unterseite 32 des Treibgliedes 5 ist wiederum der Oberseite 12 abgewandt. Die Oberseite 12 verläuft mindestens teilweise am Treibgliedhöcker 6. An der Oberseite 12 des Treibglieds 5 ist eine funktionale Fläche 22 vorgesehen. Die funktionale Fläche 22 ist auf dem Treibgliedhöcker 6 ausgebildet. Die funktionale Fläche 22 entspricht dem Abschnitt der Oberseite 12 des Treibgliedes 5, der beim Schneiden eines Werkstoffes funktional mit dem Schnittgrund zusammenwirkt, diesen also kontaktiert und somit als Tiefenbegrenzer des Schnittes dient. Die funktionale Fläche 22 umfasst demnach einen Abschnitt der Oberseite 12, in welchem die Oberseite 12 einen maximalen Abstand a zur Öffnungsebene 15 aufweist. Ferner erstreckt sich die funktionale Fläche 22 der Oberseite 12 über eine in Richtung senkrecht zur Öffnungsebene 15 gemessene Tiefe b. Die Tiefe b entspricht höchstens 20%, insbesondere höchstens 10% des maximalen Abstands a zwischen der funktionalen Fläche 22 und der Öffnungsebene 15. Der Schneidprozess ist ein hochdynamischer Prozess, so dass davon auszugehen ist, dass das Treibglied 5 das Schnittgut nicht nur an dem "höchsten Punkt" seines Treibgliedhöckers 6 kontaktiert, sondern Wirkverbindungen auch an zu dem "höchsten Punkt" benachbarten Bereichen vorliegen. Dieser Bereich ist schematisch mit einer Begrenzungslinie 34 angedeutet, die der Tiefe b der funktionalen Fläche 22 entspricht. Ferner weist die funktionale Fläche 22 eine in Richtung der Längsachse 18 gemessene Länge c auf, wobei die Längs c der funktionalen Fläche 22 mindestens 15%, insbesondere mindestens 25% einer in Richtung der Längsachse 18 gemessenen Länge d des Treibglieds 5 beträgt.

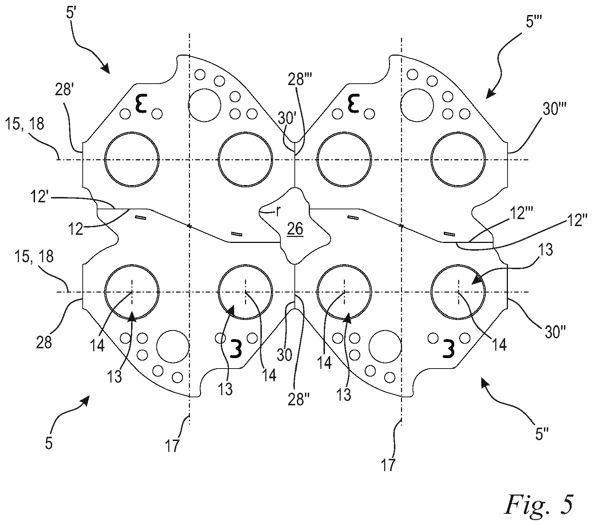

Wie in Fig. 2 gezeigt, ist an der Oberseite 12 eine Anlagefläche 23 vorgesehen. Die Anlagefläche 23 ist auf der Oberseite 12 beabstandet zur funktionalen Fläche 22 ausgebildet. Die funktionale Fläche 22 der Oberseite 12 des Treibglieds 5 ist gegenüber der Anlagefläche 23 in Blickrichtung auf die Treibgliedebene 16 punktsymmetrisch zu einem Symmetriepunkt 20 ausgebildet. Der Symmetriepunkt 20 liegt im bevorzugten Ausführungsbeispiel auf der Oberseite 12 des Treibgliedes 5. Diese zumindest teilweise symmetrische Gestaltung der Oberseite 12 ermöglicht, wie in Fig. 5 gezeigt, eine Anordnung zweier baugleicher Treibglieder 5, 5' derart, dass sich deren Oberseiten 12 im Ausführungsbeispiel vollständig an der funktionalen Fläche 22 sowie der Anlagefläche 23, insbesondere über deren gesamte Oberseite 12, also auch an den Mittelabschnitten 24, 25, insbesondere durchgängig kontaktieren. Im Ausführungsbeispiel liegen die vordersten und hintersten Punkte der Oberseite 12, 12' des einen und des anderen Treibglieds 5, 5' aneinander an. In einer alternativen Ausführung kann es zweckmäßig sein, dass die Oberseite 12 des Treibglieds 5 derart ausgebildet ist, dass sich in einer Anordnung die Oberseiten 12 zweier Treibglieder 5, 5' lediglich über einen Teilabschnitt der funktionalen Fläche 22 sowie der Anlagefläche 23 des anderen Treibgliedes 5' kontaktieren.

Wie in Fig. 2 gezeigt, weist die Oberseite 12 des Treibgliedes 5 einen ersten Mittelabschnitt 24 und einen zweiten Mittelabschnitt 25 auf. Der erste Mittelabschnitt 24 erstreckt sich von der funktionalen Fläche 22 bis zum Symmetriepunkt 20. Der zweite Mittelabschnitt 25 erstreckt sich von dem Symmetriepunkt 20 bis zur Anlagefläche 23. Im Ausführungsbeispiel bilden die funktionale Fläche 22, der erste Mittelabschnitt 24, der zweite Mittelabschnitt 25 und die Anlagefläche 23 die Oberseite 12 des Treibgliedes 5. Die Oberseite 12 weist dabei eine in Richtung der Längsachse 18 gemessene Länge e auf, wobei die Länge e mindestens 65%, insbesondere mindestens 75%, vorzugsweise in etwa 85% der Länge d des Treibgliedes 5 entspricht. Im Ausführungsbeispiel bilden die Konturen des ersten Mittelabschnittes 24 und des zweiten Mittelabschnittes 25 gemeinsam in Blickrichtung auf die Treibgliedebene 16 eine Verbindungsgerade zwischen der funktionalen Fläche 22 und der Anlagefläche 23. Die Verbindungsgerade schneidet den Symmetriepunkt 20. Demnach sind im Ausführungsbeispiel der erste Mittelabschnitt 24 und der zweite Mittelabschnitt 25 ebenfalls in Blickrichtung auf die Treibgliedebene 16 vollständig punktsymmetrisch bezüglich des Symmetriepunktes 20 ausgebildet. Demnach entsteht in einer Anordnung zweier baugleicher Treibglieder 5, die gegenseitig an ihren Oberseiten 12 anliegen und zwischen den Oberseiten 12 keinen Zwickel aufweisen (Fig. 5).

In einer alternativen, ebenfalls erfindungsgemäßen Ausführung des Treibgliedes kann es vorgesehen sein, dass der erste Mittelabschnitt 24 gegenüber dem zweiten Mittelabschnitt 25 in Blickrichtung auf die Treibgliedebene 16 lediglich teilweise punktsymmetrisch bezüglich des Symmetriepunktes 20 ausgebildet ist. Demnach wären die beiden Mittelabschnitte 24, 25 zumindest teilweise asymmetrisch ausgebildet. Dies hat zur Folge, dass sich in einer Anordnung zweier baugleicher Treibglieder 5, in der sich die Oberseiten 12 der Treibglieder 5 kontaktieren und deren Symmetriepunkte 20 aufeinander liegen, die Oberseiten 12 der Treibglieder 5 sich lediglich teilweise kontaktieren. Demnach liegt zwischen den Oberseiten 12 der Treibglieder 5 im Bereich der Mittelabschnitte 24, 25 ein Zwickel vor. Um dennoch eine kompakte Anordnung der Treibglieder realisieren zu können, muss der Zwickel fertigbar sein. Demnach sind die Mittelabschnitte 24, 25 derart ausgebildet, dass der kleinste Radius r mindestens 1,5 mm beträgt. Der kleineste Radius r beträgt insbesondere mindestens das 1,5fache der Breite f des Treibgliedes 5. Die Breite f des Treibgliedes 5 wird senkrecht zur Treibgliedebene 16 gemessen.

Wie in Fig. 2 gezeigt, liegt der Symmetriepunkt 20 in Richtung der Längsachse 18 zwischen den Mittelachsen 14 der Öffnungen 13, 13'. Im bevorzugten Ausführungsbeispiel liegt der Symmetriepunkt 20 zwischen den Öffnungen 13, 13' des Treibgliedes 5. Der Symmetriepunkt 20 weist zur Querebene 17 einen Abstand von weniger als 10%, insbesondere von weniger als 5% der Länge d des Treibgliedes 5 auf. Im bevorzugten Ausführungsbeispiel liegt der Symmetriepunkt 20 in der Querebene 17.

Wie in den Figuren 2 und 4 gezeigt, erstreckt sich das Treibglied 5 entlang seiner Längsachse 18 von seinem einen Längsende 27 zu seinem anderen Längsende 29. Das Treibglied 5 weist an seinem einen Längsende 27 eine erste Stirnseite 28 und an seinem anderen Längsende 29 eine zweite Stirnseite 30 auf. Im bevorzugten Ausführungsbeispiel sind die Stirnseiten 28, 30 parallel zueinander ausgerichtet. Zudem sind die Stirnseiten 28, 30 parallel zur Querebene 17 ausgerichtet. Dies erlaubt, wie in Fig. 5 gezeigt, eine Anordnung zweier baugleicher Treibglieder 5, 5" derart, dass sich die Stirnseiten 28, 28", 30, 30" kontaktieren und mindestens teilweise, bevorzugt jedoch vollständig gegenseitig bedecken. In der Anordnung nach Fig. 5 sind die Treibglieder 5, 5" in Längsrichtung 18 derart angeordnet, dass die zweite Stirnseite 30 des einen Treibgliedes 5 die erste Stirnseite 28" des anderen Treibgliedes 5" kontaktiert.

In einer alternativen Ausführung des Treibgliedes 5 können die Stirnseiten 28, 30 auch andere Konturen aufweisen, insbesondere eine gekrümmte Kontur, aufweisen. Damit eine Anordnung von Treibgliedern 5 dennoch derart möglich ist, dass sich deren Stirnseiten kontaktieren und im Wesentlichen überdecken, ist die zweite Stirnseite 30 des Treibgliedes 5 bezüglich der ersten Stirnseite 28 des Treibgliedes 5 parallelverschoben. Die Parallelverschiebung erfolgt vorzugsweise entlang der Längsachse 18 des Treibgliedes 5.

Wie in den Figuren 2 und 4 gezeigt, sind die funktionale Fläche 22 und damit auch die Anlagefläche 23 parallel zur Öffnungsebene 15 ausgebildet. Ferner könnten die funktionale Fläche 22 und die Anlagefläche 23 in einer alternativen Ausführung anders geformt sein. Die Oberseite 12 könnte beispielsweise eine S-förmige Kontur aufweisen. Somit sind Konturen möglich die zumindest eine teilweise Punktsymmetrie zwischen der funktionalen Fläche 22 und der Anlagefläche 23 bilden.

Wie in Fig. 5 gezeigt, sind vier baugleiche Treibglieder 5, 5', 5", 5‴ zueinander angeordnet. Jeweils zwei Treibglieder 5, 5', 5", 5‴ kontaktieren sich an ihren Oberseiten 12, 12', 12", 12‴, und jeweils zwei Treibglieder 5, 5', 5", 5‴ kontaktieren sich an ihren Stirnseiten 30, 28", 30', 28'". Dabei umschließen die Treibglieder 5, 5', 5", 5‴ mit ihren Konturen zwischen den Oberseiten 12, 12', 12", 12‴ und den Stirnseiten 30, 28", 30', 28‴ einen mittigen Zwickel 26. Die Konturen sind derart ausgebildet, dass der kleinste Radius r des mittigen Zwickels 26 mindestens 1,5 mm beträgt. Auch der kleinste Radius r des mittigen Zwickels 26 beträgt vorzugsweise das 1,5fache der Breite f des Treibgliedes 5.

## Patentansprüche

1. Treibglied für eine Sägekette, wobei das Treibglied (5) zwei Öffnungen (13) für Gelenkelemente (7), einen Treibansatz (9) und einen Treibgliedhöcker (6) aufweist, wobei das Treibglied (5) flächig ausgebildet ist und sich in einer Treibgliedebene (16) erstreckt, wobei das Treibglied (5) eine Öffnungsebene (15) aufweist, die die Mittelachsen (14) der Öffnungen (13) enthält und senkrecht zur Treibgliedebene (16) verläuft, wobei das Treibglied (5) eine Querebene (17) aufweist, die senkrecht zur Öffnungsebene (15) und mittig zwischen den Mittelachsen (14) der beiden Öffnungen (13) verläuft, wobei das Treibglied (5) eine Längsachse (18) aufweist, die in der Treibgliedebene (16) verläuft und die Mittelachsen (14) der Öffnungen (13) schneidet, wobei der Treibgliedhöcker (6) unsymmetrisch zur Querebene (17) ausgebildet ist, wobei das Treibglied (5) eine der Öffnungsebene (15) abgewandt liegende Oberseite (12) aufweist, die mindestens teilweise am Treibgliedhöcker (6) verläuft,
wobei an der Oberseite (12) des Treibglieds (5) eine funktionale Fläche (22) und eine von der funktionalen Fläche (22) beabstandete Anlagefläche (23) vorgesehen sind, und wobei die funktionale Fläche (22) auf dem Treibgliedhöcker (6) ausgebildet ist und einen Abschnitt der Oberseite (12) umfasst, in welchem die Oberseite (12) einen maximalen Abstand (a) zur Öffnungsebene (15) aufweist,
**dadurch gekennzeichnet, dass** die funktionale Fläche (22) der Oberseite (12) des Treibglieds (5) gegenüber der Anlagefläche (23) in Blickrichtung auf die Treibgliedebene (16) punktsymmetrisch zu einem Symmetriepunkt (20) ausgebildet ist.

2. Treibglied nach Anspruch 1,
**dadurch gekennzeichnet, dass** sich die funktionale Fläche (22) der Oberseite (12) über eine in Richtung senkrecht zur Öffnungsebene (15) gemessene Tiefe (b) erstreckt, wobei die Tiefe (b) höchstens 20%, insbesondere höchstens 10% des maximalen Abstands (a) zwischen der funktionalen Fläche (22) und der Öffnungsebene (15) entspricht.

3. Treibglied nach Anspruch 1 oder 2,
**dadurch gekennzeichnet, dass** eine in Richtung der Längsachse (18) gemessene Länge (c) der funktionalen Fläche (22) mindestens 15%, insbesondere mindestens 25% einer in Richtung der Längsachse (18) gemessenen Länge (d) des Treibglieds (5) beträgt.

4. Treibglied nach einem der Ansprüche 1 bis 3,
**dadurch gekennzeichnet, dass** die Oberseite (12) des Treibgliedes (5) einen ersten Mittelabschnitt (24) und einen zweiten Mittelabschnitt (25) aufweist, wobei sich der erste Mittelabschnitt (24) von der funktionalen Fläche (22) bis zum Symmetriepunkt (20) und der zweite Mittelabschnitt (25) von dem Symmetriepunkt (20) bis zur Anlagefläche (23) erstrecken.

5. Treibglied nach Anspruch 4,
**dadurch gekennzeichnet, dass** der erste Mittelabschnitt (24) und der zweite Mittelabschnitt (25) derart ausgebildet sind, dass bei einer Anordnung zweier Treibglieder (5, 5') zueinander, in der sich die Oberseiten (12, 12') der Treibglieder (5, 5') kontaktieren und deren Symmetriepunkte (20, 20') aufeinander liegen, ein Zwickel (26) zwischen den Mittelabschnitten (24, 24', 25, 25') der Oberseiten (12, 12') mit einem kleinsten Radius (r) von mindestens 1,5 mm vorgesehen ist.

6. Treibglied nach Anspruch 4 oder 5,
**dadurch gekennzeichnet, dass** der erste Mittelabschnitt (24) gegenüber dem zweiten Mittelabschnitt (25) in Blickrichtung auf die Treibgliedebene (16) zumindest teilweise punktsymmetrisch bezüglich des Symmetriepunktes (20) ausgebildet ist.

7. Treibglied nach Anspruch 4,
**dadurch gekennzeichnet, dass** der erste Mittelabschnitt (24) gegenüber dem zweiten Mittelabschnitt (25) in Blickrichtung auf die Treibgliedebene (16) vollständig punktsymmetrisch bezüglich des Symmetriepunktes (20) ausgebildet ist.

8. Treibglied nach einem der Ansprüche 3 bis 7,
**dadurch gekennzeichnet, dass** die funktionale Fläche (22), der erste Mittelabschnitt (24), der zweite Mittelabschnitt (25) und die Anlagefläche (23) die Oberseite (12) des Treibgliedes (5) bilden.

9. Treibglied nach Anspruch 8,
**dadurch gekennzeichnet, dass** die Oberseite (12) eine in Richtung der Längsachse (18) gemessene Länge (e) aufweist, wobei die Länge (e) mindestens 65%, insbesondere mindestens 75%, vorzugsweise in etwa 85% der Länge (d) des Treibgliedes (5) entspricht.

10. Treibglied nach einem der Ansprüche 1 bis 9,
**dadurch gekennzeichnet, dass** der Symmetriepunkt (20) in Richtung der Längsachse (18) zwischen den Mittelachsen (14) der Öffnungen (13), insbesondere zwischen den Öffnungen (13), besonders vorteilhaft mittig zwischen den Öffnungen (13), liegt.

11. Treibglied nach einem der Ansprüche 1 bis 10,
**dadurch gekennzeichnet, dass** der Symmetriepunkt (20) zur Querebene (17) einen Abstand von weniger als 10%, insbesondere von weniger als 5% der Länge (d) des Treibgliedes aufweist.

12. Treibglied nach einem der Ansprüche 1 bis 11,
**dadurch gekennzeichnet, dass** das Treibglied (5) an seinem einen Längsende (27) eine erste Stirnseite (28) und an seinem anderen Längsende (29) eine zweite Stirnseite (30) aufweist, wobei die Konturen der beiden Stirnseiten (28, 30) in Blickrichtung senkrecht auf die Treibgliedebene (16) gleichförmig ausgebildet sind.

13. Treibglied nach einem der Ansprüche 1 bis 11,
**dadurch gekennzeichnet, dass** das Treibglied (5) an seinem einen Längsende (27) eine erste Stirnseite (28) und an seinem anderen Längsende (29) eine zweite Stirnseite (30) aufweist, wobei die Konturen der beiden Stirnseiten (28, 30) in Blickrichtung senkrecht auf die Treibgliedebene (16) parallel zueinander ausgerichtet sind.

14. Anordnung mehrerer Treibglieder für eine Sägekette,
mit mindestens vier baugleichen Treibgliedern (5, 5', 5", 5‴) gemäß dem Treibglied nach Anspruch 1,
wobei jedes Treibglied (5, 5', 5", 5‴) an seinem einen Längsende (27) eine erste Stirnseite (28, 28', 28", 28‴) und an seinem anderen Längsende (29) eine zweite Stirnseite (30, 30', 30", 30‴) aufweist, wobei sich jeweils zwei Treibglieder (5, 5', 5", 5‴) an ihren Oberseiten (12, 12', 12", 12‴) und jeweils zwei Treibglieder an ihren Stirnseiten (30, 28", 30', 28‴) kontaktieren, wobei die Treibglieder (5, 5', 5", 5‴) mit ihren Konturen zwischen den Oberseiten (12, 12', 12", 12‴) und den Stirnseiten (5, 5', 5", 5‴) einen mittigen Zwickel (26) umschließen.

15. Anordnung nach Anspruch 14,
**dadurch gekennzeichnet, dass** der kleinste Radius (r) des mittigen Zwickels (26) mindestens 1,5 mm beträgt.

## Claims

1. Drive link for a sawchain, wherein the drive link (5) has two openings (13) for joint elements (7), a drive appendage (9) and a drive link apex (6), wherein the drive link (5) is planar and extends in a drive link plane (16), wherein the drive link (5) has an opening plane (15), which contains the centre axes (14) of the openings (13) and extends perpendicularly to the drive link plane (16), wherein the drive link (5) has a transverse plane (17), which extends perpendicularly to the opening plane (15) and centrally between the centre axes (14) of the two openings (13), wherein the drive link (5) has a longitudinal axis (18), which extends in the drive link plane (16) and intersects the centre axes (14) of the openings (13), wherein the drive link apex (6) is asymmetric with respect to the transverse plane (17), wherein the drive link (5) has a top (12), which faces away from the opening plane (15) and extends at least partially at the drive link apex (6),
wherein a functional surface (22) and a contact surface (23) spaced apart from the functional surface (22) are provided on the top (12) of the drive link (5), and wherein the functional surface (22) is formed on the drive link apex (6) and comprises a section of the top (12) in which the top (12) is at a maximum spacing (a) from the opening plane (15),
**characterized in that** the functional surface (22) of the top (12) of the drive link (5) is point-symmetric to a symmetry point (20) with respect to the contact surface (23) in the viewing direction toward the drive link plane (16).

2. Drive link according to Claim 1,
**characterized in that** the functional surface (22) of the top (12) extends over a depth (b) measured in a direction perpendicular to the opening plane (15), wherein the depth (b) corresponds to at most 20%, in particular at most 10%, of the maximum spacing (a) between the functional surface (22) and the opening plane (15).

3. Drive link according to Claim 1 or 2,
**characterized in that** a length (c), measured in the direction of the longitudinal axis (18), of the functional surface (22) is at least 15%, in particular at least 25%, of a length (d), measured in the direction of the longitudinal axis (18), of the drive link (5).

4. Drive link according to one of Claims 1 to 3,
**characterized in that** the top (12) of the drive link (5) has a first middle section (24) and a second middle section (25), wherein the first middle section (24) extends from the functional surface (22) to the symmetry point (20) and the second middle section (25) extends from the symmetry point (20) to the contact surface (23).

5. Drive link according to Claim 4,
**characterized in that** the first middle section (24) and the second middle section (25) are configured such that, in the case of an arrangement of two drive links (5, 5') with respect to one another, in which the tops (12, 12') of the drive links (5, 5') are in contact with one another and their symmetry points (20, 20') lie on top of one another, a gusset (26) is provided between the middle sections (24, 24', 25, 25') of the tops (12, 12') with a smallest radius (r) of at least 1.5 mm.

6. Drive link according to Claim 4 or 5,
**characterized in that**, with respect to the second middle section (25), the first middle section (24) is at least partially point-symmetric with regard to the symmetry point (20) in the viewing direction toward the drive link plane (16).

7. Drive link according to Claim 4,
**characterized in that**, with respect to the second middle section (25), the first middle section (24) is fully point-symmetric with regard to the symmetry point (20) in the viewing direction toward the drive link plane (16).

8. Drive link according to one of Claims 3 to 7,
**characterized in that** the functional surface (22), the first middle section (24), the second middle section (25), and the contact surface (23) form the top (12) of the drive link (5).

9. Drive link according to Claim 8,
**characterized in that** the top (12) has a length (e) measured in the direction of the longitudinal axis (18), wherein the length (e) corresponds to at least 65%, in particular at least 75%, preferably approximately 85% of the length (d) of the drive link (5).

10. Drive link according to one of Claims 1 to 9,
**characterized in that** the symmetry point (20) lies in the direction of the longitudinal axis (18) between the centre axes (14) of the openings (13), in particular between the openings (13), particularly advantageously centrally between the openings (13).

11. Drive link according to one of Claims 1 to 10,
**characterized in that** the symmetry point (20) is at a spacing from the transverse plane (17) of less than 10%, in particular less than 5%, of the length (d) of the drive link.

12. Drive link according to one of Claims 1 to 11,
**characterized in that** the drive link (5) has, at one longitudinal end (27), a first end face (28) and, at its other longitudinal end (29), a second end face (30), wherein the contours of the two end faces (28, 30) are identical in the viewing direction perpendicular to the drive link plane (16).

13. Drive link according to one of Claims 1 to 11,
**characterized in that** the drive link (5) has, at one longitudinal end (27), a first end face (28) and, at its other longitudinal end (29), a second end face (30), wherein the contours of the two end faces (28, 30) are oriented parallel to one another in the viewing direction perpendicular to the drive link plane (16).

14. Arrangement of a plurality of drive links for a sawchain,
having at least four structurally identical drive links (5, 5', 5", 5‴) as per the drive link according to Claim 1,
wherein each drive link (5, 5', 5", 5‴) has, at one longitudinal end (27), a first end face (28, 28', 28", 28‴) and, at its other longitudinal end (29), a second end face (30, 30', 30", 30‴), wherein in each case two drive links (5, 5', 5", 5‴) are in contact with one another at their tops (12, 12', 12", 12‴) and in each case two drive links are in contact with one another at their end faces (30, 28", 30', 28'"), wherein the drive links (5, 5', 5", 5‴) enclose, with their contours, a central gusset (26) between the tops (12, 12', 12", 12‴) and the end faces (5, 5', 5", 5‴).

15. Arrangement according to Claim 14,
**characterized in that** the smallest radius (r) of the central gusset (26) is at least 1.5 mm.

## Revendications

1. Maillon d'entraînement pour une chaîne de scie, le maillon d'entraînement (5) présentant deux ouvertures (13) pour des éléments d'articulation (7), un appendice d'entraînement (9) et une bosse de maillon d'entraînement (6), le maillon d'entraînement (5) étant conçu de façon à être plat et s'étendant dans un plan de maillon d'entraînement (16), le maillon d'entraînement (5) présentant un plan d'ouverture (15) qui contient les axes médians (14) des ouvertures (13) et s'étend perpendiculairement au plan (16) du maillon d'entraînement, le maillon d'entraînement (5) présentant un plan transversal (17), qui s'étend perpendiculairement au plan d'ouverture (15) et au milieu entre les axes médians (14) des deux ouvertures (13), le maillon d'entraînement (5) présentant un axe longitudinal (18) qui s'étend dans le plan (16) du maillon d'entraînement et qui coupe les axes médians (14) des ouvertures (13), la bosse (6) du maillon d'entraînement étant réalisée de manière non-symétrique par rapport au plan transversal (17), le maillon d'entraînement (5) présentant un côté supérieur (12) situé à l'opposé du plan d'ouverture (15), qui s'étend au moins partiellement sur la bosse (6) du maillon d'entraînement,
une surface fonctionnelle (22) et une surface d'appui (23) espacée de la surface fonctionnelle (22) étant prévues sur le côté supérieur (12) du maillon d'entraînement (5), et la surface fonctionnelle (22) étant formée sur la bosse (6) du maillon d'entraînement et comprenant une portion du côté supérieur (12) dans laquelle le côté supérieur (12) présente une distance maximale (a) par rapport au plan d'ouverture (15),
**caractérisé en ce que** la surface fonctionnelle (22) du côté supérieur (12) du maillon d'entraînement (5) est conçue de manière symétrique par rapport à un point de symétrie (20) par rapport à la surface d'appui (23) dans la direction d'observation du plan (16) du maillon d'entraînement.

2. Maillon d'entraînement selon la revendication 1,
**caractérisé en ce que** la surface fonctionnelle (22) du côté supérieur (12) s'étend sur une profondeur (b) mesurée dans une direction perpendiculaire au plan d'ouverture (15), la profondeur (b) étant d'au plus 20%, notamment d'au plus 10%, de la distance maximale (a) entre la surface fonctionnelle (22) et le plan d'ouverture (15).

3. Maillon d'entraînement selon la revendication 1 ou la revendication 2,
**caractérisé en ce qu'**une longueur (c) de la surface fonctionnelle (22) mesurée dans la direction de l'axe longitudinal (18) représente au moins 15%, notamment au moins 25%, d'une longueur (d) du maillon d'entraînement (5) mesurée dans la direction de l'axe longitudinal (18).

4. Maillon d'entraînement selon l'une des revendications 1 à 3,
**caractérisé en ce que** le côté supérieur (12) du maillon d'entraînement (5) présente une première portion médiane (24) et une deuxième portion médiane (25), la première portion médiane (24) s'étendant depuis la surface fonctionnelle (22) jusqu'au point de symétrie (20) et la deuxième portion médiane (25) s'étendant depuis le point de symétrie (20) jusqu'à la surface d'appui (23).

5. Maillon d'entraînement selon la revendication 4,
**caractérisé en ce que** la première portion médiane (24) et la deuxième portion médiane (25) sont réalisées de telle sorte que, dans le cas d'une disposition de deux maillons d'entraînement (5, 5') l'un par rapport à l'autre dans laquelle les côtés supérieurs (12, 12') des maillons d'entraînement (5, 5') sont en contact et leurs points de symétrie (20, 20') sont situés l'un sur l'autre, il est prévu un interstice (26) entre les portions médianes (24, 24', 25, 25') des faces supérieures (12, 12') avec un rayon (r) minimal d'au moins 1,5 mm.

6. Maillon d'entraînement selon la revendication 4 ou la revendication 5,
**caractérisé en ce que** la première portion médiane (24) est réalisée au moins partiellement selon une symétrie ponctuelle par rapport au point de symétrie (20) avec la deuxième portion médiane (25) dans la direction d'observation du plan du maillon d'entraînement (16).

7. Maillon d'entraînement selon la revendication 4,
**caractérisé en ce que** la première portion médiane (24) est réalisée entièrement selon une symétrie ponctuelle par rapport au point de symétrie (20) avec la deuxième portion médiane (25) dans la direction d'observation du plan du maillon d'entraînement (16).

8. Maillon d'entraînement selon l'une des revendications 3 à 7,
**caractérisé en ce que** la surface fonctionnelle (22), la première portion médiane (24), la deuxième portion médiane (25) et la surface d'appui (23) forment le côté supérieur (12) du maillon d'entraînement (5).

9. Maillon d'entraînement selon la revendication 8,
**caractérisé en ce que** le côté supérieur (12) présente une longueur (e) mesurée dans la direction de l'axe longitudinal (18), la longueur (e) étant d'au moins 65%, notamment d'au moins 75%, de préférence d'environ 85%, de la longueur (d) du maillon d'entraînement (5).

10. Maillon d'entraînement selon l'une des revendications 1 à 9,
**caractérisé en ce que** le point de symétrie (20) est situé, dans la direction de l'axe longitudinal (18), entre les axes médians (14) des ouvertures (13), en particulier entre les ouvertures (13), de manière particulièrement avantageuse à mi-distance entre les ouvertures (13).

11. Maillon d'entraînement selon l'une des revendications 1 à 10,
**caractérisé en ce que** le point de symétrie (20) par rapport au plan transversal (17) est situé à une distance inférieure à 10%, notamment inférieure à 5%, de la longueur (d) du maillon d'entraînement.

12. Maillon d'entraînement selon l'une des revendications 1 à 11,
**caractérisé en ce que** le maillon d'entraînement (5) présente à l'une de ses extrémités longitudinales (27) une première face frontale (28) et à son autre extrémité longitudinale (29) une deuxième face frontale (30), les contours des deux faces frontales (28, 30) étant réalisés de manière uniforme dans la direction d'observation perpendiculaire au plan du maillon d'entraînement (16).

13. Maillon d'entraînement selon l'une des revendications 1 à 11,
**caractérisé en ce que** le maillon d'entraînement (5) présente une première face frontale (28) à l'une de ses extrémités longitudinales (27) et une deuxième face frontale (30) à son autre extrémité longitudinale (29), les contours des deux faces frontales (28, 30) étant orientés parallèlement l'un à l'autre dans la direction d'observation perpendiculaire au plan du maillon d'entraînement (16).

14. Agencement de plusieurs maillons d'entraînement pour une chaîne de scie, avec au moins quatre maillons d'entraînement (5, 5', 5", 5'") de construction identique au maillon d'entraînement selon la revendication 1,
chaque maillon d'entraînement (5, 5', 5'", 5"") présentant à l'une de ses extrémités longitudinales (27) une première face frontale (28, 28', 28", 28'") et à son autre extrémité longitudinale (29) une deuxième face frontale (30, 30', 30", 30'"), deux maillons d'entraînement (5, 5', 5", 5'") se rejoignant respectivement sur leurs côtés supérieurs (12, 12', 12", 12'") et deux maillons d'entraînement sur leurs faces frontales respectives (30, 28", 30', 28'"), les maillons d'entraînement (5, 5', 5", 5'") entourant un interstice central (26) avec leurs contours entre les faces supérieures (12, 12', 12", 12'") et les faces frontales (5, 5', 5", 5'").

15. Agencement selon la revendication 14,
**caractérisé en ce que** le plus petit rayon (r) de l'interstice central (26) est d'au moins 1,5 mm.
